# EUROPEAN PATENT APPLICATION

(11) **EP 4 708 925 A1**
(43) Date of publication of application: **11.03.2026**
(21) Application number: 24208644.5
(22) Date of filing: 24.10.2024
(51) Int. Cl.: H04W 4/06, H04M 1/00, H04M 3/00, H04W 4/46, H04W 4/80, H04W 76/10, H04W 84/18, H04W 4/08

(54) **WIRELESS INTERCOM DEVICE FOR BIKE AND COMMUNICATION METHOD THEREOF**

(30) Priority: 05.09.2024 KR 20240120943
(71) Applicant: KIDO SPORTS CO., LTD., Seoul 07590 (KR)
(72) Inventor: KIM, Tae Woo, 07572 Seoul (KR)
(74) Representative: Kehl, Ascherl, Liebhoff & Ettmayr Patentanwälte Partnerschaft mbB

(57) **Abstract**

Disclosed are a wireless intercom device for a bike and a communication method thereof. The wireless intercom device for a bike includes a Bluetooth module configured to perform Bluetooth communication with another wireless intercom device for a bike, and a one-to-one call module configured to perform a one-to-one call through the Bluetooth communication performed by the Bluetooth module, wherein the Bluetooth module is configured to perform Bluetooth pairing with a plurality of wireless intercom devices for a bike in a daisy chain manner, and the wireless intercom device for a bike further includes a group call module configured to perform a group call through Bluetooth communication when the Bluetooth pairing with the plurality of wireless intercom devices for a bike is performed in the daisy chain manner by the Bluetooth module.

## Description

### [Technical Field]

The present invention relates to an intercom device and a communication method thereof, and more specifically, to a wireless intercom device for a bike and a communication method thereof.

### [Background Art]

Riders riding bikes often ride in groups. The engine noise of the bikes is loud, making it difficult to communicate with each other.

Riders use intercom devices installed on their bike helmets to communicate with each other while riding.

Conventional intercom devices are mainly designed to communicate via Bluetooth. However, since Bluetooth communication is mainly configured for peer-to-peer communication, there are several problems when multiple riders communicate with each other.

In order for multiple riders to communicate each other via Bluetooth communication, intercom devices of the riders may be configured to be serially connected in a daisy chain manner, and in order for multiple riders to communicate each other, the intercom devices of the riders may be configured to be connected in a mesh manner.

However, there is a problem in that a connection between riders via Bluetooth communication are disconnected when distance between riders increases during the group riding, and there is a problem in that all connections between the riders via Bluetooth communication are disconnected when the Bluetooth communication of any one intercom device is disconnected. Further, a procedure for Bluetooth pairing between intercom devices is very complicated, difficult, and time-consuming.

Therefore, when four or more riders form a group, the riders do not use the intercom devices, but rather use group calls on mobile communication networks, mobile messenger group calls, or products that support a mesh-type communication method.

However, there are problems in that it is not easy to generate a group call network by adding dozens of phone numbers one by one to group calls on a mobile communication network, and in the case of mobile messenger group calls, when a mobile communication call comes in, the mobile messenger group call is immediately disconnected.

In conclusion, when four or more riders form a group and ride, the conventional Bluetooth-type intercom devices are likely to become useless.

### [Related Art Documents]

### [Patent Documents]

Korean Patent Registration No. 10-1033170
Korean Patent Registration No. 10-1591893

### [Disclosure]

### [Technical Problem]

The present invention is directed to providing a wireless intercom device for a bike.

The present invention is also directed to providing a communication method of a wireless intercom device for a bike.

### [Technical Solution]

One aspect of the present invention provides a wireless intercom device for a bike, which includes a Bluetooth module configured to perform Bluetooth communication with a plurality of other wireless intercom devices for a bike, and a one-to-one call module configured to perform a one-to-one call through the Bluetooth communication performed by the Bluetooth module.

Here, the Bluetooth module may be configured to perform Bluetooth pairing with the plurality of wireless intercom devices for a bike in a daisy chain manner.

Further, the wireless intercom device for a bike may further include a group call module configured to perform a group call through Bluetooth communication when the Bluetooth pairing with the plurality of wireless intercom devices for a bike is performed in the daisy chain manner by the Bluetooth module.

Further, the Bluetooth module may be configured to automatically perform Bluetooth pairing with a wireless intercom device for a bike with a strongest signal strength among the plurality of other wireless intercom devices for a bike when the Bluetooth communication is disconnected.

Further, the wireless intercom device for a bike may further include an ear microphone configured to receive a user's voice and output the other party's voice during the one-on-one call performed by the one-on-one call module or a group call performed by a group call module.

Another aspect of the present invention provides a communication method of a wireless intercom device for a bike, which includes pairing, by a wireless intercom device for a bike, with a plurality of other wireless intercom devices for a bike and performing a Bluetooth connection, and performing, by the wireless intercom device for a bike, a voice call with the plurality of other wireless intercom devices for a bike through the Bluetooth connection.

Here, in the pairing of, by the wireless intercom device for a bike, with the plurality of other wireless intercom devices for a bike and performing the Bluetooth connection, the Bluetooth connection may be performed by Bluetooth pairing with the plurality of other wireless intercom devices for a bike in a daisy chain manner.

Further, in the performing of, by the wireless intercom device for a bike, the voice call with the plurality of other wireless intercom devices for a bike through the Bluetooth connection, when the Bluetooth connection is established by performing Bluetooth pairing with the plurality of other wireless intercom devices for a bike in the daisy chain manner, a group call with the plurality of other wireless intercom devices for a bike may be performed.

Further, the communication method may further include, when the Bluetooth communication is disconnected, automatically performing Bluetooth pairing with a wireless intercom device for a bike with a strongest signal strength among the plurality of other wireless intercom devices for a bike and performing the Bluetooth connection in the daisy chain manner.

Further, the communication method may further include performing, by the wireless intercom device for a bike, a voice call with the paired wireless intercom device for a bike through the Bluetooth connection performed by the automatically performed Bluetooth pairing.

### [Advantageous Effects]

According to the above-described wireless intercom device for a bike and communication method thereof, by forming a Wi-Fi communication network between users' wireless intercom devices for a bike through a mobile Wi-Fi router and a mobile Wi-Fi repeater that are mounted on the bike or carried by the user, and enabling group calls between the users through Wi-Fi communication, not only can a communication connection distance between the users while riding a bike be longer than that of the conventional intercom device, but the communication connection can also be maintained more stably.

### [Description of Drawings]

FIG. 1 is a schematic diagram of a wireless intercom system for a bike according to an embodiment of the present invention.
FIGS. 2A and 2B are block diagrams of a wireless intercom device for a bike according to an embodiment of the present invention.
FIG. 3 is a flowchart of a communication method of a wireless intercom device for a bike according to an embodiment of the present invention.

### [Best Mode of the Invention]

While the present invention is open to various modifications and alternative forms, specific embodiments thereof are shown by way of example in the accompanying drawings and will be described in detail in specific contents for embodying the present invention. However, it should be understood that there is no intent to limit the present invention to the particular forms disclosed, and on the contrary, the present invention is to cover all modifications, equivalents, and alternatives falling within the spirit and scope of the present invention. Like numbers refer to like elements throughout the description of the figures.

It will be understood that, although the terms "first," "second," etc., may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any and all combinations of one or more of the associated listed items.

It will be understood that when an element is referred to as being "connected" or "coupled" to another element, it can be directly connected or coupled to another element or intervening elements may be present. In contrast, when an element is referred to as being "directly connected" or "directly coupled" to another element, there are no intervening elements present.

The terminology used herein is for the purpose of describing particular embodiments only and is not intended to be limiting to the present invention. As used herein, the singular forms "a," and "an" are intended to include the plural forms as well, unless the context clearly indicates otherwise. It will be further understood that the terms "comprise," "comprising," "include" or "including," when used herein, specify the presence of stated features, integers, steps, operations, elements, components, or groups thereof, but do not preclude the presence or addition of one or more other features, integers, steps, operations, elements, components, or groups thereof.

Unless otherwise defined, all terms including technical and scientific terms used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, exemplary embodiments of the present invention will be described in detail with reference to the accompanying drawings.

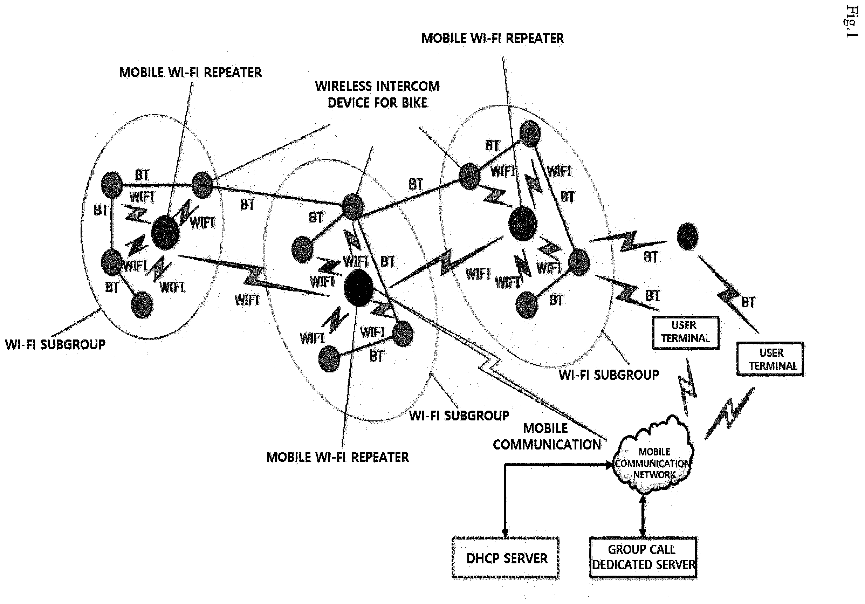

FIG. 1 is a schematic diagram of a wireless intercom system for a bike according to an embodiment of the present invention.

Referring to FIG. 1, the wireless intercom system for a bike may be configured to enable group calls between wireless intercom devices for a bike in various ways.

In a first embodiment, the wireless intercom system for a bike may be basically configured such that wireless intercom devices for a bike can make group calls therebetween through Bluetooth communication. Here, the Bluetooth communication may enable the wireless intercom devices for a bike to be connected in a daisy chain manner and make group calls.

Meanwhile, in a second embodiment, the wireless intercom system for a bike may include a mobile Wi-Fi router 100 and at least one mobile Wi-Fi repeater 200 connected to the mobile Wi-Fi router 100, and may be configured such that a plurality of wireless intercom devices 300 for a bike forming a bike group are connected to the mobile Wi-Fi router 100 or the mobile Wi-Fi repeater 200 to form a Wi-Fi subgroup that can communicate with each other. Such Wi-Fi communication may enable group calls between the wireless intercom devices for a bike. Here, a dynamic host configuration protocol (DHCP) server may be configured to assign an IP (Internet Protocol) address to each of intercom devices for a bike to enable group calls between the intercom devices for a bike.

In the case in which 20 to 30 riders are riding their bikes in a group, the bikes are sometimes lined up for about 100 meters. In this case, the length of the line is quite long and the Bluetooth communication connection is often disconnected due to changes in position of the bikes. Therefore, by configuring the mobile Wi-Fi router 100 and the mobile Wi-Fi repeater 200 as hosts to enable group calls between the wireless intercom devices 300 for a bike, stable communication may be enabled.

Even when the position of the bike is changed, the bike may be reconnected to the mobile Wi-Fi router 100 or mobile Wi-Fi repeater 200 with the strongest Wi-Fi signal, and thus communication disconnection due to the changes in position of the bikes is prevented.

In particular, when the wireless intercom device 300 for a bike goes far away from a specific Wi-Fi signal range, the wireless intercom device 300 for a bike that goes out of the Wi-Fi signal radius may perform Bluetooth pairing with nearest another wireless intercom device 300 for a bike to establish a Bluetooth connection, and may mutually convert protocols between a Bluetooth connection and a Wi-Fi connection to maintain the two wireless intercom devices 300 for a bike within the group call.

That is, when the wireless intercom device 300 for a bike goes far away from a Wi-Fi group, the group call may be stably maintained through Bluetooth communication.

In particular, the wireless intercom device 300 for a bike and the mobile Wi-Fi repeater 200 may be configured to register an intercom ID and a Wi-Fi repeater ID in the mobile Wi-Fi router 100 by near-field communication (NFC) tagging. Here, the NFC tagging may enable intercom IDs to be mutually registered between the wireless intercom devices 300 for a bike.

The Wi-Fi connection is possible only when the intercom IDs and the Wi-Fi repeater ID are pre-registered, so that an intercom device of another terminal or another bike may be prevented from being connected to the corresponding bike group through the Wi-Fi connection.

In a third embodiment, the wireless intercom system for a bike may be configured such that wireless intercom devices for a bike perform group calls therebetween via a mobile communication network. In this case, a group call dedicated server may be configured to establish a call session between user terminals, that is, smartphones, of users to enable a voice over Internet Protocol (VoIP) group call. In such a VoIP group call, there is no communication disconnection even when the distance between the bikes, i.e. the users, is far. Each user terminal may make a voice call by Bluetooth communication with an ear microphone of the wireless intercom device for a bike mounted on a helmet.

When a specific user is excludes from a Wi-Fi subgroup and Wi-Fi communication becomes impossible, a group call status may be maintained through Bluetooth communication as described above, but the group call status may also be maintained through VoIP communication. For the VoIP communication, a DHCP server may be configured to pre-assign IP addresses of respective pre-registered user terminals.

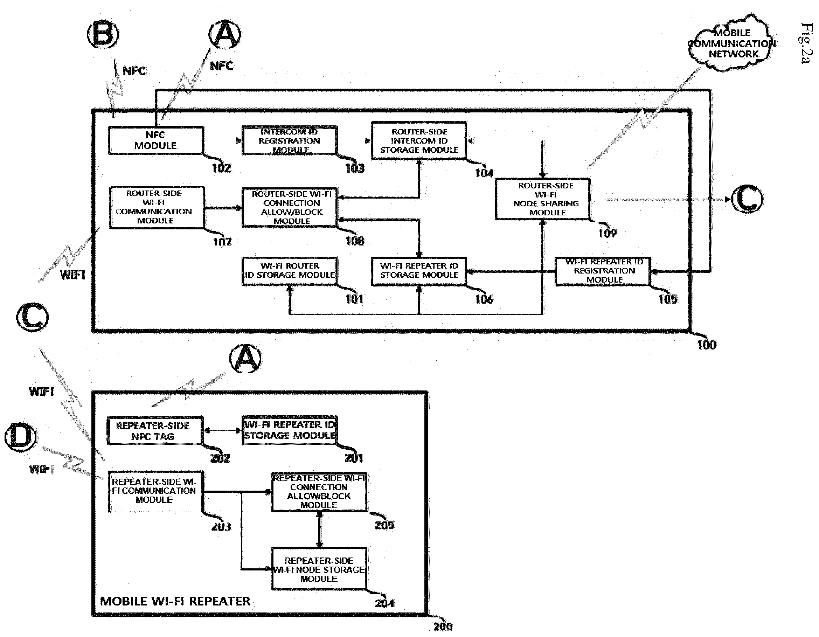

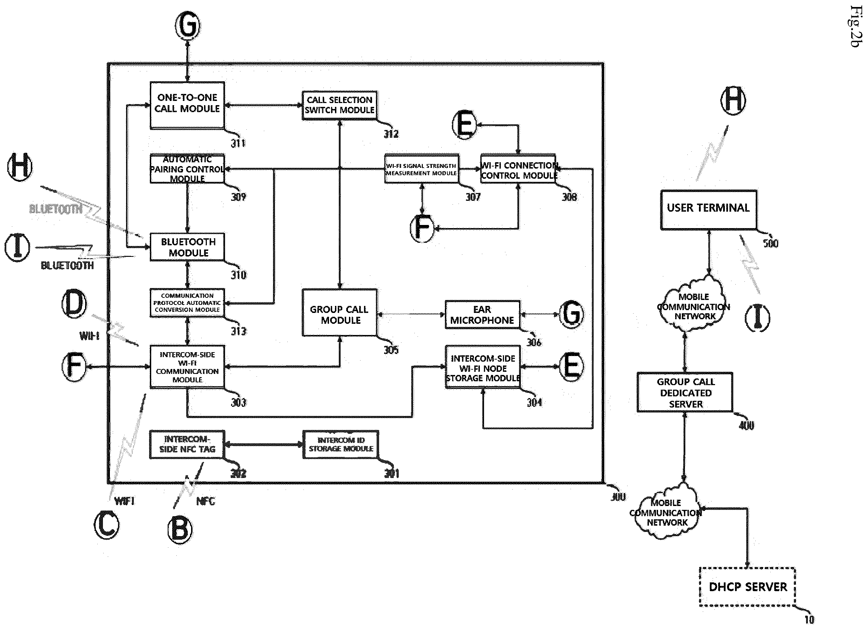

FIGS. 2A and 2B are block diagrams of a wireless intercom device for a bike according to an embodiment of the present invention.

Referring to FIGS. 2A and 2B, the wireless intercom device for a bike according to the embodiment of the present invention may include a mobile Wi-Fi router 100, a mobile Wi-Fi repeater 200, and a wireless intercom device 300 for a bike.

Hereinafter, detailed configurations thereof will be described.

The mobile Wi-Fi router 100 is a Wi-Fi host and may be configured to perform Wi-Fi communication for group calls.

Here, the mobile Wi-Fi router 100 may be carried by a user or mounted on the user's bike.

The mobile Wi-Fi router 100 may include a Wi-Fi router ID storage module 101, an NFC module 102, an intercom ID registration module 103, a router-side intercom ID storage module 104, a Wi-Fi repeater ID registration module 105, a Wi-Fi repeater ID storage module 106, a router-side Wi-Fi communication module 107, a router-side Wi-Fi connection allow/block module 108, and a router-side Wi-Fi node sharing module 109.

Hereinafter, detailed configurations thereof will be described.

The Wi-Fi router ID storage module 101 may be configured to pre-store a Wi-Fi router ID.

The NFC module 102 may be configured to recognize each of a Wi-Fi repeater ID and an intercom ID by NFC communication.

The intercom ID registration module 103 may be configured to register the intercom ID recognized by the NFC module 102.

The router-side intercom ID storage module 104 may be configured to store the intercom ID registered in the intercom ID registration module 103.

The Wi-Fi repeater ID registration module 105 may be configured to register the Wi-Fi repeater ID recognized by the NFC module 102.

The Wi-Fi repeater ID storage module 106 may be configured to store the Wi-Fi repeater ID registered in the Wi-Fi repeater ID registration module 105.

The router-side Wi-Fi communication module 107 may be configured to perform Wi-Fi communication with the mobile Wi-Fi repeater 200 and the wireless intercom device 300 for a bike.

The router-side Wi-Fi connection allow/block module 108 may be configured to allow or block a Wi-Fi connection of the mobile Wi-Fi repeater 200 or the wireless intercom device 300 for a bike through the router-side Wi-Fi communication module 107 by referring to the router-side intercom ID storage module 104 or the Wi-Fi repeater ID storage module 106. The router-side Wi-Fi connection allow/block module 108 may match the IP address assigned by the DHCP server 10 with the intercom ID or the Wi-Fi repeater ID to obtain matching data, and may allow or block a Wi-Fi connection using the obtained matching data.

The router-side Wi-Fi node sharing module 109 may be configured to share the Wi-Fi router ID stored in the Wi-Fi router ID storage module 101 and the intercom ID stored in the router-side intercom ID storage module 104 with the mobile Wi-Fi repeater 200. In this case, the matching data matched with the IP address assigned by the DHCP server 10 may also be shared.

The mobile Wi-Fi repeater 200 may be configured to relay the Wi-Fi communication performed by the mobile Wi-Fi router 100.

Here, the mobile Wi-Fi repeater 200 may be carried by the user or mounted on the user's bike.

The mobile Wi-Fi repeater 200 may include a Wi-Fi repeater ID storage module 201, a repeater-side NFC tag 202, a repeater-side Wi-Fi communication module 203, a repeater-side Wi-Fi node storage module 204, and a repeater-side Wi-Fi connection allow/block module 205.

Hereinafter, detailed configurations thereof will be described.

The Wi-Fi repeater ID storage module 201 may be configured to pre-store a Wi-Fi repeater ID.

The repeater-side NFC tag 202 may be configured to store a Wi-Fi repeater ID corresponding to the Wi-Fi repeater ID pre-stored in the Wi-Fi repeater ID storage module 201 and allow the stored Wi-Fi repeater ID to be transmitted to the NFC module 102 of the mobile Wi-Fi router 100 through NFC communication.

The repeater-side Wi-Fi communication module 203 may be configured to perform Wi-Fi communication with the mobile Wi-Fi router 100 and the wireless intercom device 300 for a bike, and to pre-receive the Wi-Fi router ID and the intercom ID that are shared with the router-side Wi-Fi node sharing module 109.

The repeater-side Wi-Fi node storage module 204 may be configured to store the Wi-Fi router ID and the intercom ID that are pre-received by the repeater-side Wi-Fi communication module 203.

The repeater-side Wi-Fi connection allow/block module 205 may be configured to allow or block a Wi-Fi connection of the mobile Wi-Fi repeater 200 and the wireless intercom device 300 for a bike through the repeater-side Wi-Fi communication module 203 by referring to the Wi-Fi router ID and the intercom ID that are stored in the repeater-side Wi-Fi node storage module 204. Here, the repeater-side Wi-Fi connection allow/block module 205 may allow or block the Wi-Fi connection by referring to the Wi-Fi router ID, the intercom ID, and the matching data matched with each IP address.

The wireless intercom device 300 for a bike may be detachable to a bike helmet and connected to the mobile Wi-Fi router 100 or the mobile Wi-Fi repeater 200 to perform a group call with other wireless intercom devices 300 for a bike that is connected to the mobile Wi-Fi router 100 or the mobile Wi-Fi repeater 200 through Wi-Fi communication.

The wireless intercom device 300 for a bike may include an intercom ID storage module 301, an intercom-side NFC tag 302, an intercom-side Wi-Fi communication module 303, an intercom-side Wi-Fi node storage module 304, a group call module 305, an ear microphone 306, a Wi-Fi signal strength measurement module 307, a Wi-Fi connection control module 308, an automatic pairing control module 309, a Bluetooth module 310, a one-to-one call module 311, a call selection switch module 312, and an automatic communication protocol conversion module 313.

Hereinafter, detailed configurations thereof will be described.

The intercom ID storage module 301 may be configured to pre-store an intercom ID.

The intercom-side NFC tag 302 may be configured to store an intercom ID corresponding to the intercom ID pre-stored in the intercom ID storage module 301.

Further, the intercom-side NFC tag 302 may be configured to allow the intercom ID pre-stored in the intercom ID storage module 301 to be transmitted to the NFC module 102 of the mobile Wi-Fi router 100 through NFC communication.

The intercom-side Wi-Fi communication module 303 may be configured to perform Wi-Fi communication with the mobile Wi-Fi router 100 and the mobile Wi-Fi repeater 200.

Further, the intercom-side Wi-Fi communication module 303 may be configured to pre-receive the Wi-Fi router ID and the Wi-Fi repeater ID that are shared with the router-side Wi-Fi node sharing module 109.

The intercom-side Wi-Fi node storage module 304 may be configured to store the Wi-Fi router ID and the Wi-Fi repeater ID pre-received by the intercom-side Wi-Fi communication module 303.

The group call module 305 may be configured to perform a group call with another wireless intercom device 300 for a bike through the Wi-Fi communication performed by the intercom-side Wi-Fi communication module 304.

The ear microphone 306 may be configured to receive a user's voice for the group call performed by the group call module 305 and output another user's voice in the group call.

The Wi-Fi signal strength measurement module 307 may be configured to measure strength of a Wi-Fi signal pre-received through the intercom-side Wi-Fi communication module 303 in real time.

The Wi-Fi connection control module 308 may be configured to control the intercom-side Wi-Fi communication module 303 to be connected to the mobile Wi-Fi router 100 or the mobile Wi-Fi repeater 200 with the highest Wi-Fi signal strength measured in real time by the Wi-Fi signal strength measurement module 307, through Wi-Fi connection, by referring to the intercom-side Wi-Fi node storage module 304.

The automatic pairing control module 309 may control to perform automatic pairing for Bluetooth communication with another preset wireless intercom device 300 for a bike when the Wi-Fi signal strength of the mobile Wi-Fi router 100 or the mobile Wi-Fi repeater 200 measured in real time by the Wi-Fi signal strength measurement module 307 is less than or equal to a predetermined reference. Through this, a specific bike-specific intercom device 100 that is excluded from a bike group and cannot perform Wi-Fi communication may also maintain the group call.

The Bluetooth module 310 may be configured to perform Bluetooth communication with another wireless intercom device 300 for a bike that has been paired in advance. The Bluetooth module 310 may automatically perform Bluetooth pairing again with another wireless intercom device 300 for a bike that currently has the strongest signal when the Bluetooth connection is disconnected while riding, and perform Bluetooth communication.

Meanwhile, a Bluetooth signal strength monitoring module (not illustrated) may be configured to monitor whether a Bluetooth signal strength falls below a certain reference in real time, and when the Bluetooth signal strength falls below the certain reference as a result of the real-time monitoring, to notify the corresponding user in real time that the Bluetooth signal strength is low, through the ear microphone 306.

Further, a GPS distance monitoring module (not illustrated) may be configured to monitor GPS position information of a user terminal 400 of the corresponding user connected to each wireless intercom device 300 for a bike to calculate a distance between the users in real time.

Further, the Bluetooth module 310 may be configured to perform automatic pairing with another wireless intercom device 300 for a bike that is preset under the control of the automatic pairing control module 309 to perform Bluetooth communication.

The one-to-one call module 311 may be configured to perform a one-to-one call with another wireless intercom device 300 for a bike that has been pre-paired by the Bluetooth communication performed by the Bluetooth module 310.

The call selection switch module 312 may be configured to perform switching between the group call of the group call module 305 and the one-to-one call of the one-to-one call module 311.

The user may make a one-to-one call through Bluetooth communication with a specific user whose device has been paired in advance, while making a group call.

The automatic communication protocol conversion module 313 may be configured to automatically convert in real time communication protocols between the Bluetooth communication of the Bluetooth module 310 and the Wi-Fi communication of the intercom-side Wi-Fi communication module 303 with another wireless intercom device 300 for a bike that has been automatically paired under the control of the automatic pairing control module 309. Since both of the Bluetooth communication and the Wi-Fi communication are basically packet-based communication, calls may be maintained within a single group call by performing protocol conversion between the Bluetooth protocol and the Wi-Fi protocol for packets.

Meanwhile, a router-side connected user ID monitoring module (not illustrated) of the mobile Wi-Fi router 100 may be configured to monitor the currently connected wireless intercom device 300 for a bike in real time, generate a router-side connected user list in real time, and store the generated router-side connected user list in a router-side connected user list storage module (not illustrated).

Further, a repeater-side connected user ID monitoring module (not illustrated) of the mobile Wi-Fi repeater 200 may be configured to monitor the currently connected wireless intercom device 300 for a bike in real time, generate a repeater-side connected user list in real time, and store the generated repeater-side connected user list in a repeater-side connected user list storage module (not illustrated).

Meanwhile, a repeater-side connected user list sharing module (not illustrated) of the mobile Wi-Fi repeater 200 may be configured to share the repeater-side connected user list stored in the repeater-side connected user list storage module (not illustrated) in real time with the mobile Wi-Fi router 100.

An excluded user monitoring module (not illustrated) of the mobile Wi-Fi router 100 may be configured to collect in real time the router-side connected user list stored in the router-side connected user list storage module (not illustrated) and the repeater-side connected user list shared in real time with the repeater-side connected user list sharing module (not illustrated), generate a group call list in real time, compare the group call list generated in real time with the intercom ID stored in the router-side intercom ID storage module in real time, and identify a Wi-Fi group excluded user in real time.

Further, an excluded user notification module (not illustrated) of the mobile Wi-Fi router 100 may be configured to output the excluded user identified in real time by the excluded user monitoring module (not illustrated) as a voice notification on a group call channel. The users may easily identify an excluded user among numerous users in the group while riding. That is, a user who is involved in an accident, falls behind, or takes a wrong road may be easily identified.

On the other hand, the mobile Wi-Fi router 100 or the mobile Wi-Fi repeater 200 may be implemented as an application on each user's smartphone. The above mobile Wi-Fi router 100 or mobile Wi-Fi repeater 200 may be implemented using a built-in Wi-Fi module (not illustrated) equipped in each user terminal 400, that is, the user's smartphone. A Wi-Fi relay may be performed using a hotspot function of the user terminal 400. The user terminal 400 may be classified into a hotspot host terminal, a hotspot relay terminal, and a hotspot terminal. The hotspot host terminal may be configured such that the function of the mobile Wi-Fi router 100 is correctly implemented, the hotspot relay terminal may be configured such that the function of the mobile Wi-Fi repeater 200 is correctly implemented, the hotspot terminal may be configured such that the function of the wireless intercom device 300 for a bike is correctly implemented, and all of the user terminals 300 may perform functions as the hotspot host terminal, the hotspot relay terminal, and the hotspot terminal according to the settings on the application. Here, the hotspot host terminal may be configured to collect in real time GPS position information of each hotspot relay terminal and each hotspot terminal, and may automatically grant hotspot relay terminal authority to a specific hotspot terminal in real time using the real-time collected GPS position information. In this case, the group call status may be stably maintained through signals even when the position of each bike changes frequently and there are bikes that fall behind.

Meanwhile, a group call-only application may be pre-installed on each user terminal 400. VoIP voice calls are possible between the user terminals 400 under the control of a group call dedicated server 400, and the group call dedicated server 400 may be configured to set a group call session using each ID and IP address of a router-side Wi-Fi node shared with the router-side Wi-Fi node sharing module 109.

In this case, when there is a user who is excluded during Wi-Fi communication, the connection may be maintained through Bluetooth communication and the group call status may be maintained through communication protocol conversion, as described above, whereas the group call status may also be maintained by the group call dedicated server 400 for the corresponding excluded user. In this case, the automatic communication protocol conversion module 313 may convert VoIP voice call packets into call packets for Wi-Fi communication to enable the excluded user to be connected to the corresponding group call session.

On the other hand, the bike-mounted intercom device 300 may include an acceleration sensor (not illustrated). The acceleration sensor (not illustrated) may be configured to detect 3D acceleration greater than or equal to acceleration at a predetermined angle. The 3D acceleration that is greater than or equal to acceleration at the predetermined angle may be, for example, a left or right turn at an intersection of 70 to 80 degrees or more.

In this case, the intercom-side Wi-Fi communication module 303 may transmit the 3D acceleration that is greater than or equal to acceleration at the predetermined angle detected by the acceleration sensor (not illustrated) to the router-side Wi-Fi communication module 107 or the repeater-side Wi-Fi communication module 203 in real time.

Further, the router-side Wi-Fi communication module 107 of the mobile Wi-Fi router 100 may receive the 3D acceleration in real time from the intercom-side Wi-Fi communication module 107 or the repeater-side Wi-Fi communication module 203.

Further, the excluded user monitoring module (not illustrated) may compare 3D accelerations within a predetermined time interval in real time, which are received in real time from the router-side Wi-Fi communication module 107, and recognize the bike-mounted intercom device 300 having a 3D acceleration that falls outside a predetermined range as an excluded user as a result of the comparison.

The mobile Wi-Fi router 100 may further include a GPS module (not illustrated), and an excluded user information transmission module (not illustrated).

Here, the GPS module (not illustrated) may be configured to generate real-time router GPS position information.

The excluded user information transmission module (not illustrated) may be configured to transmit the real-time router GPS position information generated by the GPS module (not illustrated) and the excluded user recognized by the excluded user monitoring module (not illustrated) to the group call dedicated server 400 in real time.

Further, the group call dedicated server 400 may receive the real-time router GPS position information and the excluded user from the excluded user information transmission module (not illustrated) of the mobile Wi-Fi router 100, and request real-time excluded user GPS position information from the user terminal 500 of the received excluded user and receive the received real-time excluded user GPS position information.

Further, the user terminal 500 may be configured to generate real-time route guidance information for going to the pre-received real-time router GPS position information on the basis of the received real-time excluded user GPS position information, and to provide the generated real-time route guidance information to the user terminal 500 of the excluded user in real time.

The user terminal 500 may be controlled to receive the real-time route guidance information from the group call dedicated server 400 and output voice through the bike-mounted intercom device 300 of the excluded user, and the excluded user may easily join the group through voice route guidance.

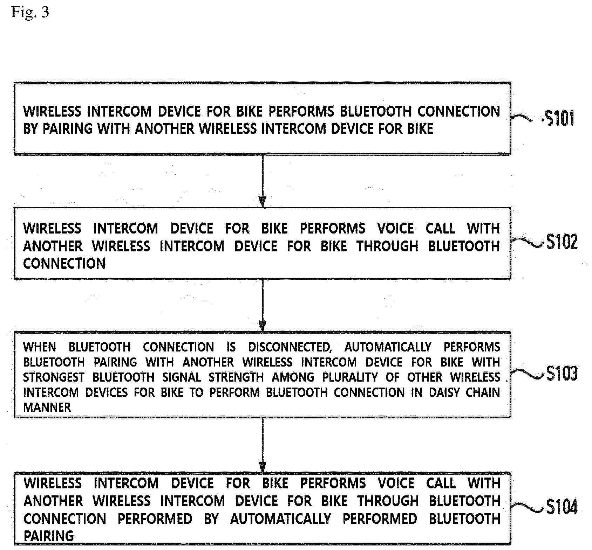

FIG. 3 is a flowchart of a communication method of a wireless intercom device for a bike according to an embodiment of the present invention.

Referring to FIG. 3, a wireless intercom device 300 for a bike performs a Bluetooth connection by pairing with another wireless intercom device 300 for a bike (S101).

In this case, the wireless intercom device 300 for a bike may be configured to perform a Bluetooth connection by performing Bluetooth pairing with a plurality of other wireless intercom devices 300 for a bike in a daisy chain manner.

Next, the wireless intercom device 300 for a bike performs a voice call with another wireless intercom device 300 for a bike through a Bluetooth connection (S102).

In this case, the wireless intercom device 300 for a bike may be configured to perform a group call with a plurality of other wireless intercom devices 300 for a bike when a Bluetooth connection is established by performing Bluetooth pairing with the plurality of other wireless intercom devices 300 for a bike in a daisy chain manner.

Next, when the Bluetooth connection is disconnected, Bluetooth pairing is automatically performed with another wireless intercom device 300 for a bike with the strongest Bluetooth signal strength among the plurality of other wireless intercom devices 300 for a bike to perform a Bluetooth connection in a daisy chain manner (S103).

Next, the wireless intercom device 300 for a bike performs a voice call with another wireless intercom device 300 for a bike through the Bluetooth connection performed by the automatically performed Bluetooth pairing (S104).

While the present invention has been described above with reference to embodiments, it may be understood by those skilled in the art that various modifications and alterations may be made without departing from the spirit and scope of the present invention described in the appended claims.

### [Reference Numerals]

100: mobile Wi-Fi router
101: Wi-Fi router ID storage module
102: NFC module
103: intercom ID registration module
104: router-side intercom ID storage module
105: Wi-Fi repeater ID registration module
106: Wi-Fi repeater ID storage module
107: router-side Wi-Fi communication module
108: router-side Wi-Fi connection allow/block module
109: router-side Wi-Fi node sharing module
200: mobile Wi-Fi repeater
201: Wi-Fi repeater ID storage module
202: repeater-side NFC tag
203: repeater-side Wi-Fi communication module
204: repeater-side Wi-Fi node storage module
205: repeater-side Wi-Fi connection allow/block module
300: wireless intercom device for bike
301: intercom ID storage module
302: intercom-side NFC tag
303: intercom-side Wi-Fi communication module
304: intercom-side Wi-Fi node storage module
305: group call module
306: ear microphone
307: Wi-Fi signal strength measurement module
308: Wi-Fi connection control module
309: automatic pairing control module
310: Bluetooth module
311: one-to-one call module
312: call selection switch module
313: automatic communication protocol conversion module

## Claims

1. A wireless intercom device for a bike comprising:
a Bluetooth module configured to perform Bluetooth communication with a plurality of other wireless intercom devices for a bike; and
a one-to-one call module configured to perform a one-to-one call through the Bluetooth communication performed by the Bluetooth module.

2. The wireless intercom device for a bike of claim 1, wherein the Bluetooth module is configured to perform Bluetooth pairing with the plurality of wireless intercom devices for a bike in a daisy chain manner.

3. The wireless intercom device for a bike of claim 2, further comprising a group call module configured to perform a group call through Bluetooth communication when the Bluetooth pairing with the plurality of wireless intercom devices for a bike is performed in the daisy chain manner by the Bluetooth module.

4. The wireless intercom device for a bike of claim 3, wherein the Bluetooth module is configured to automatically perform Bluetooth pairing with a wireless intercom device for a bike with a strongest signal strength among the plurality of other wireless intercom devices for a bike when the Bluetooth communication is disconnected.

5. The wireless intercom device for a bike of claim 1, further comprising an ear microphone configured to receive a user's voice and output the other party's voice during the one-on-one call performed by the one-on-one call module or a group call performed by a group call module.

6. A communication method of a wireless intercom device for a bike, comprising:
pairing, by a wireless intercom device for a bike, with a plurality of other wireless intercom devices for a bike and performing a Bluetooth connection; and
performing, by the wireless intercom device for a bike, a voice call with the plurality of other wireless intercom devices for a bike through the Bluetooth connection.

7. The communication method of claim 6, wherein, in the pairing of, by the wireless intercom device for a bike, with the plurality of other wireless intercom devices for a bike and performing the Bluetooth connection, the Bluetooth connection is performed by Bluetooth pairing with the plurality of other wireless intercom devices for a bike in a daisy chain manner.

8. The communication method of claim 7, wherein, in the performing of, by the wireless intercom device for a bike, the voice call with the plurality of other wireless intercom devices for a bike through the Bluetooth connection, when the Bluetooth connection is established by performing Bluetooth pairing with the plurality of other wireless intercom devices for a bike in the daisy chain manner, a group call with the plurality of other wireless intercom devices for a bike are performed.

9. The communication method of claim 8, further comprising, when the Bluetooth communication is disconnected, automatically performing Bluetooth pairing with a wireless intercom device for a bike with a strongest signal strength among the plurality of other wireless intercom devices for a bike and performing the Bluetooth connection in the daisy chain manner.

10. The communication method of claim 9, further comprising performing, by the wireless intercom device for a bike, a voice call with the paired wireless intercom device for a bike through the Bluetooth connection performed by the automatically performed Bluetooth pairing.
